# EUROPEAN PATENT APPLICATION

(11) **EP 4 852 465 A1**
(43) Date of publication of application: **09.12.2026**
(21) Application number: 26182340.5
(22) Date of filing: 01.06.2026
(51) Int. Cl.: H04W 4/021, H04L 9/40, H04L 67/52, H04W 4/029

(54) **INFORMATION PROCESSING APPARATUS, INFORMATION PROCESSING METHOD, AND INFORMATION PROCESSING PROGRAM**

(30) Priority: 04.06.2025 IL 32129725
(71) Applicant: FUJITSU LIMITED, Kawasaki-shi, Kanagawa 211-8588 (JP); B.G. Negev Technologies and Applications Ltd, 8410501 Beer Sheva (IL)
(72) Inventor: GLICKSTEIN, Yoni, 8410501 Beer Sheva (IL); ZILBERMAN, Aviram, 8410501 Beer Sheva (IL); PUZIS, Rami, 8410501 Beer Sheva (IL); SHABTAI, Asaf, 8410501 Beer Sheva (IL); BRODT, Oleg, 8410501 Beer Sheva (IL); ELOVICI, Yuval, 8410501 Beer Sheva (IL); OTUNG, Andikan, Slough, SL1 2BE (GB); MANOR, Ofir, Slough, SL1 2BE (GB); SCHWARTZ, Tomer, Slough, SL1 2BE (GB); INOUE, Koki, Kawasaki-shi, 211-8588 (JP)
(74) Representative: Haseltine Lake Kempner LLP

(57) **Abstract**

An information processing apparatus includes, a request reception unit configured to receive a web request from a user terminal device, an execution command transmission unit configured to transmit, to the user terminal device, an execution command for transmitting a predetermined request to one or more marking devices whose geographical positions are known, a collection unit configured to collect, from each of the marking devices, information on a round trip time between each of the marking devices and the user terminal device for each of the marking devices to which the predetermined request has been transmitted from the user terminal device, and a position identification unit configured to identify a geographical position of a place where the user terminal device is present based on a relational model indicating a relation between a delay and a distance and information on the round trip time for each of the marking devices.

## Description

### FIELD

The present invention relates to an information processing apparatus, an information processing method, and an information processing program.

### BACKGROUND

In an age where digital privacy and security are regarded as the most important, a virtual private network (VPN) is used for various purposes including ensuring privacy, enhancing security, and avoiding geographical content restriction. In such a situation where the VPN is widely used, accurate identification and position specification of VPN traffic are important for content distribution and network management.

Video streaming and the like are often managed by a complex license agreement between a content creator and a content provider that provides streaming service. A contract for video streaming content may have a restriction for limiting viewing of specific content in a specific area. In addition, in order to comply with various regulations such as laws, a restriction may be set on an area where content can be viewed. Such a restriction is referred to as "geo-fencing" of content. When the geo-fencing is set, the content provider grasps the physical position of a user, and restricts access to content of the user outside a permitted area.

Here, the user can be connected to a web server that distributes content via a VPN server by using a VPN. VPN service usually functions by an agent adding an encapsulated header to a packet. For example, the agent encrypts a packet transmitted from a user terminal, and wraps the encrypted packet with an additional Internet protocol (IP) header. In this way, the modified packet includes a header of two consecutive layers 3. The content of the original packet is not grasped throughout a distribution network since the content is encrypted. Actual routing is executed based on an IP address in a new header added by the VPN service.

Moreover, in the VPN service, service that enables use of a VPN server desired by the user may be provided. In this case, in the header added by the agent, the address of the VPN server designated by the user is designated as a destination address. When a packet of a request transmitted from the user arrives at a VPN server of a desired country, the VPN server removes extra headers. Then, the VPN server applies network address transfer (NAT), and then transfers the packet to the original destination address.

The user can hide the geographical position and the IP address of the user himself/herself by using the VPN server as described above. For example, a transmission source can be made to appear as if being in the same country by using a NAT function of the VPN server that is present in address space of the destination country. Hiding an actual geographical position is advantageous for a user seeking anonymity to ensure privacy. In content, the content provider needs to determine whether or not the VPN service is used for accessing content in which geo-fencing is set.

In order to determine whether or not the web server in which geo-fencing is set is permitted to respond to a web request, it is important to correctly determine a use situation of the VPN service and further identify the location of the VPN server. Note, however, that advanced VPN technology and user behavior make it increasingly difficult to determine whether a specific request received by the web server has performed accessing via the VPN server. When the use situation of the VPN service and the location of the VPN server are not appropriately identified, a user outside a restricted area may be able to illegally browse and acquire content.

Therefore, various techniques for determining whether or not a user is hidden behind VPN service have been proposed. The most common technique is to blacklist an IP address of VPN service that is popular among malicious users. Furthermore, there is a technique of detecting use of VPN service based on TLS handshake time measurement.

In addition, there has been proposed a technique of identifying geographical information on a client terminal based on user information transmitted from a client terminal and user information and geographical information transmitted from a mobile phone terminal.

Patent Literature 1: Japanese Laid-open Patent Publication No. 2008-262495

Blacklisting, however, can address known famous VPN service, but has difficulty in detecting access using unknown or non-famous VPN service. Furthermore, the detection technique based on the TLS handshake time measurement is not successfully applied to non-TLS traffic, and has no effect on protocols other than TLS. The technique is insufficient to address various accesses.

Furthermore, the technique of identifying the geographical information on a client terminal based on user information from the client terminal and user information and geographical position from a mobile phone terminal has difficulty in addressing hiding of an actual geographical position in a case where a VPN is used. Therefore, both the techniques have difficulty in appropriately operating and managing web service in which geo-fencing is set.

Accordingly, it is desirable to provide, an information processing method, and an information processing program for appropriately operating and managing web service.

### SUMMARY

According to an aspect of an embodiment, an information processing apparatus includes, a request reception unit that receives a web request from a user terminal device, an execution command transmission unit that transmits, to the user terminal device, an execution command for transmitting a predetermined request to one or more marking devices whose geographical positions are known, a collection unit that collects, from each of the marking devices, information on a round trip time between each of the marking devices and the user terminal device for each of the marking devices to which the predetermined request has been transmitted from the user terminal device, and a position identification unit that identifies a geographical position of a place where the user terminal device is present based on a relational model indicating a relation between a delay and a distance and information on the round trip time for each of the marking devices.

### BRIEF DESCRIPTION OF DRAWINGS

Reference is made, by way of example only, to the following drawings, in which:
FIG. 1 is a system configuration diagram of a web service system according to an embodiment.
FIG. 2 is a block diagram of a web server according to the embodiment.
FIG. 3 illustrates a step of transmitting a web request from a client to the web server.
FIG. 4 illustrates a step of transmitting an execution command from the web server to the client.
FIG. 5 illustrates a step of transmitting execution requests from the client to landmark devices.
FIG. 6 illustrates a step of transmitting challenges from the landmark devices to the client.
FIG. 7 illustrates a step of transmitting responses from the client to the landmark devices.
FIG. 8 illustrates a step of notification of a round trip time from the landmarks devices to the web server.
FIG. 9 illustrates parameters used in estimation processing using a relational model.
FIG. 10 illustrates an example of a system configuration used in training of the relational model.
FIG. 11 is a sequence diagram of processing of collecting a round trip processing time at the time of training.
FIG. 12 is a sequence diagram of the processing of collecting a round trip processing time in a case where a web request is received.
FIG. 13 is a flowchart of processing of determining the presence or absence of a VPN server and processing of estimating the geographical position of the client.
FIG. 14 is a hardware configuration diagram of the web server.

### DESCRIPTION OF EMBODIMENTS

Preferred embodiments of the present disclosure will be explained with reference to accompanying drawings. Note that the information processing apparatus, the information processing method, and the information processing program disclosed in the present application are not limited by the following embodiment.

### Embodiment

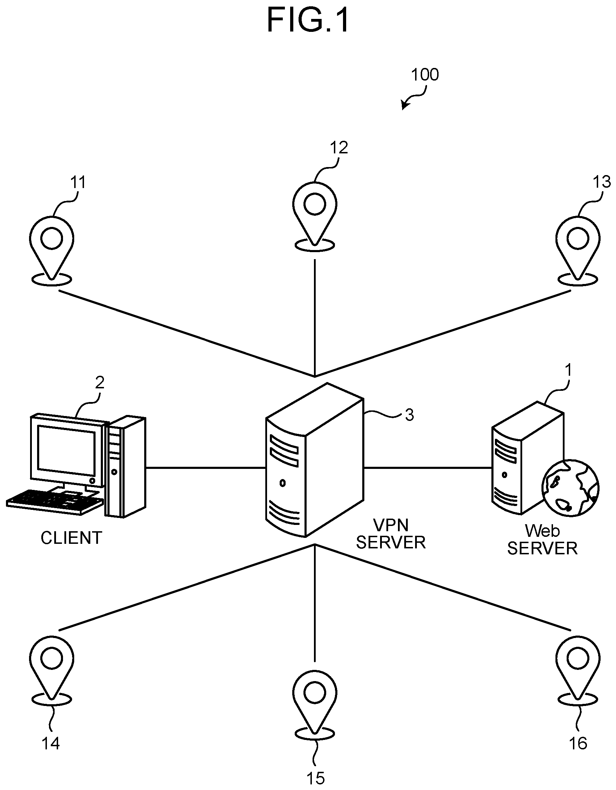

FIG. 1 is a system configuration diagram of a web service system according to an embodiment. A web service system 100 according to the embodiment includes a web server 1 and landmark devices 11 to 16. Furthermore, the web service system 100 includes a client 2 that requests access to the web server 1. FIG. 1 illustrates a network configuration for the client 2 to access the web server 1. Although the client 2 may directly access the web server 1, FIG. 1 illustrates a system configuration in a case where the client 2 accesses the web server 1 via a VPN server 3.

The web server 1 provides, for example, web service in which geo-fencing is set. Hereinafter, an area where service can be provided from the web server 1 by geo-fencing is referred to as a "permitted area", and an area where service is not successfully provided is referred to as a "non-permitted area". Here, an overview of provision of predetermined service provided by the web server 1 will be described.

The web server 1 is connected to the client 2 via the VPN server 3 to which access is permitted. The web server 1 receives a web request from the client 2 via the VPN server 3. Here, the web request is made for receiving web service provided by the web server 1 on the web. Examples of the web request include a content request in a case where service that provides content is received.

The web server 1 estimates the geographical position of the client 2, and determines whether or not the client 2 is present in the permitted area. When it is determined that the client 2 is present in the permitted area, the web server 1 returns a reply to the web request to the client 2, and provides predetermined web service to a user. In contrast, when it is determined that the client 2 is present in the non-permitted area, the web server 1 does not provide the service to the client 2.

The geographical positions of the landmark devices 11 to 16 are known. Furthermore, landmark devices 10 have a function of processing a hypertext transfer protocol secure (HTTPS) request. All the landmark devices 11 to 16 have the same function. In the following description, when not distinguished from each other, the landmark devices 11 to 16 are collectively referred to as the "landmark devices 10".

The landmark devices 10 are used for the web server 1 to estimate the geographical position of the client 2. Each of the landmark devices 10 measures a round trip time (RTT) between each of the landmark devices 10 and the client 2, and notifies the web server 1 of the measured round trip time. Here, the round trip time is a time taken for the entire communication between devices. The round trip time between the client 2 and each of the landmark devices 10 includes a communication delay between the client 2 and the VPN server 3, a communication delay between the VPN server 3 and each of the landmark devices 10, and a communication delay and a processing delay of the last mile in each of the landmark devices 10. The total of the communication delay and the processing delay of the last mile in each of the landmark devices 10 is referred to as a "use delay of each of the landmark devices 10".

The client 2 transmits a web request to the web server 1 to the VPN server 3 by using a web browser. When service is provided from the web server 1, the client 2 receives a reply to the web request from the VPN server 3, and receives provision of predetermined web service.

The VPN server 3 receives the web request transmitted from the client 2, changes a transmission source address to an address of the VPN server 3 itself by a network address translation (NAT) function, and transmits the address to the web server 1. When service is provided from the web server 1, the VPN server 3 receives a reply to a web browser to the web request from the web server 1. Then, the VPN server 3 changes a destination address of the reply to the client 2, and transmits the reply to the client 2.

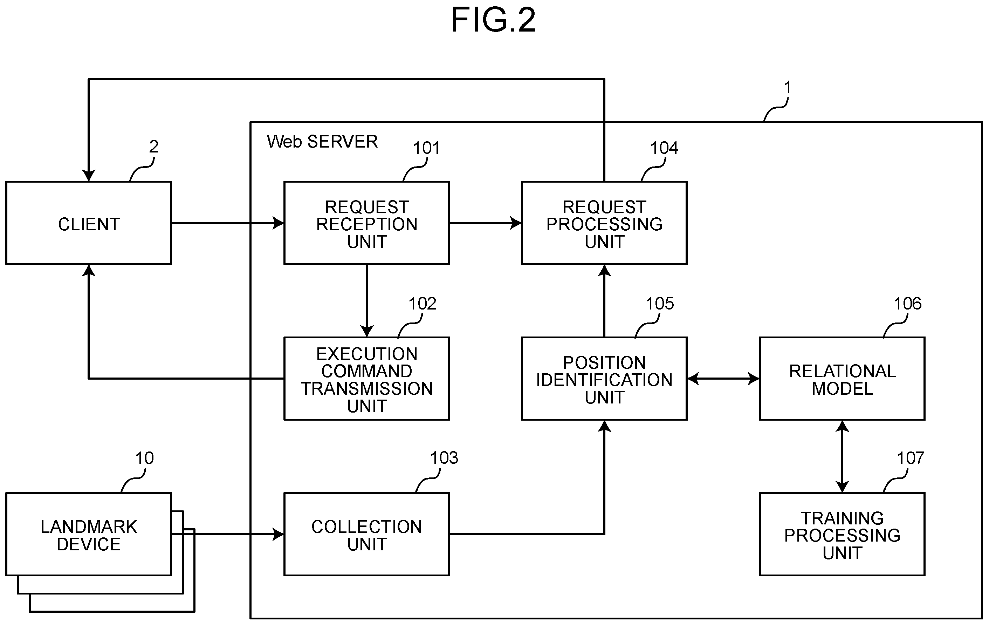

FIG. 2 is a block diagram of the web server according to the embodiment. Next, details of service provision processing performed by the web server 1 in consideration of the geographical position of the client 2 will be described with reference to FIG. 2. As illustrated in FIG. 2, the web server 1 includes a request reception unit 101, an execution command transmission unit 102, a collection unit 103, a request processing unit 104, a position identification unit 105, a relational model 106, and a training processing unit 107. Here, although the client 2 may communicate with the web server 1 via the VPN server 3, the VPN server 3 is omitted in FIG. 2 for easy understanding of the communication between the client 2 and the web server 1.

The request reception unit 101 receives a web request transmitted by the client 2. Then, the request reception unit 101 notifies the execution command transmission unit 102 that the web request has been received. Furthermore, the request reception unit 101 outputs the acquired web request to the request processing unit 104. In this manner, the request reception unit 101 receives the web request from the client 2, which is a user terminal device.

The execution command transmission unit 102 receives a notification indicating that the web request has been received from the request reception unit 101. Then, the execution command transmission unit 102 transmits an execution command to the client 2. The execution command is issued for transmitting an execution request from the client 2 to each of the landmark devices 10. The execution request is made for requesting execution of measurement of a round trip time between the client 2 and each of the landmark devices 11 to 16.

The landmark devices 10 are examples of a "marking device". Furthermore, the execution request made for requesting execution of measurement of a round trip time between the client 2 and each of the landmark devices 11 to 16 is an example of a "predetermined request". The execution command is issued for causing a landmark device 10 that has received a predetermined request from the client 2 to measure a round trip time from when the client 2 transmits a reply request to when the client 2 receives a reply to the reply request. The execution command transmission unit 102 transmits, to the user terminal device, an execution command for transmitting a predetermined request to one or more marking devices whose geographical positions are known.

The collection unit 103 receives and collects, from each of the landmark devices 10, information on a round trip time between each of the landmark devices 10 and the client 2, which has been measured by each of the landmark devices 10 in response to the execution request. Then, the collection unit 103 outputs the collected information on a round trip time between the client 2 and each of the landmark devices 10 to the position identification unit 105.

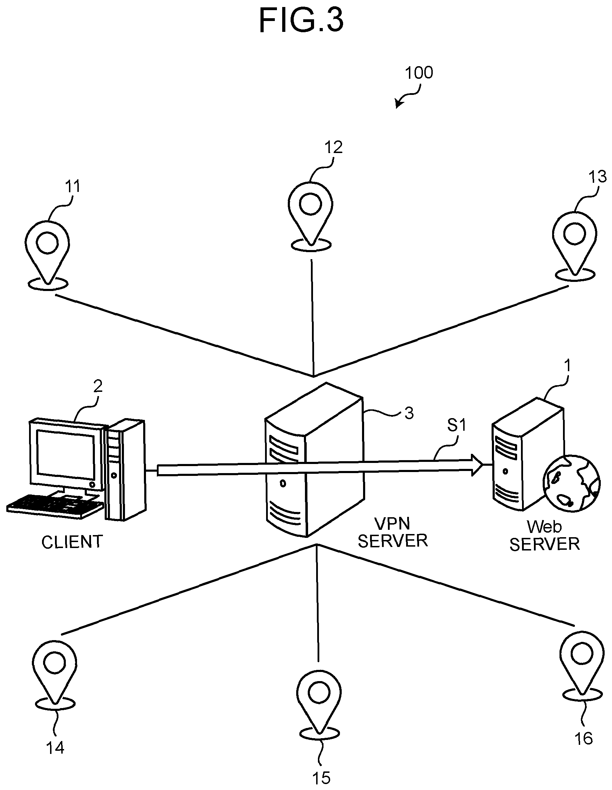

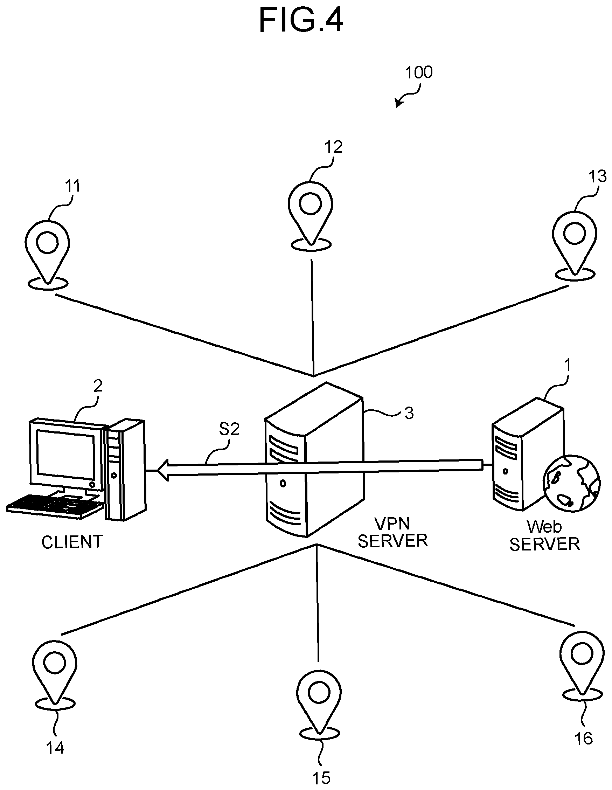

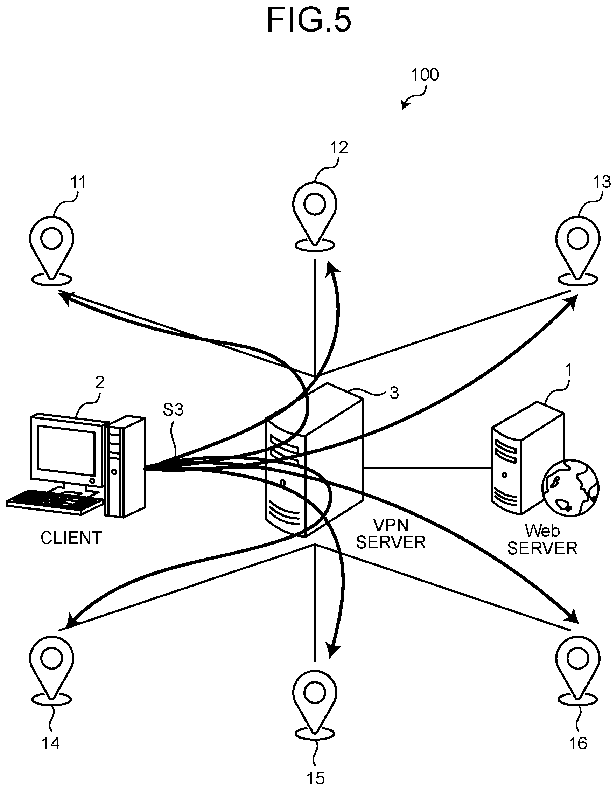

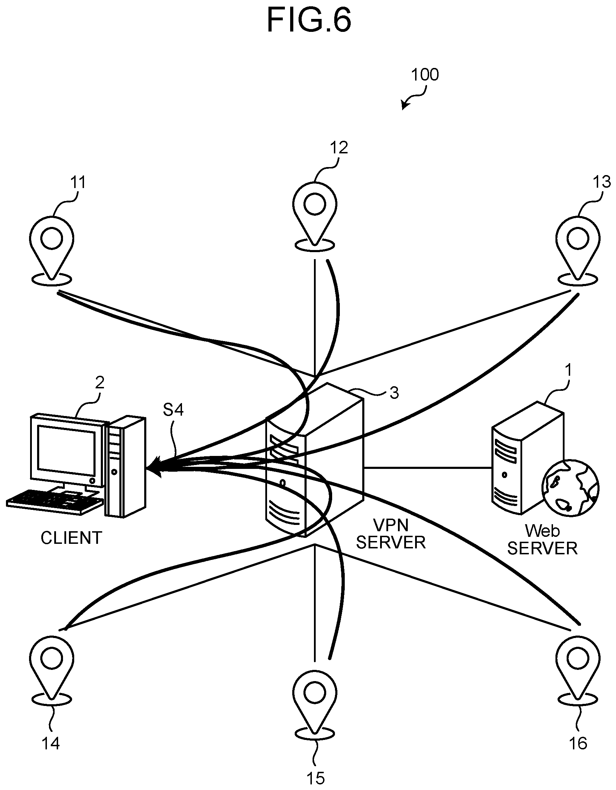

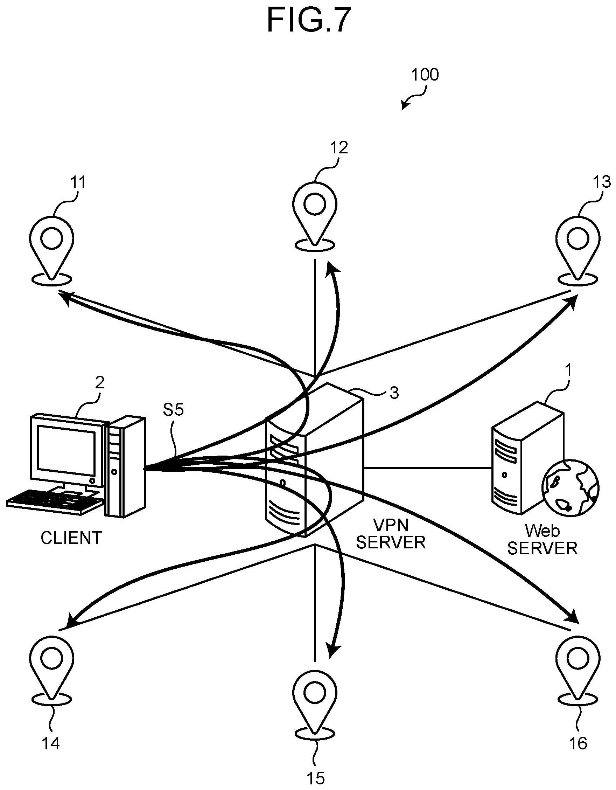

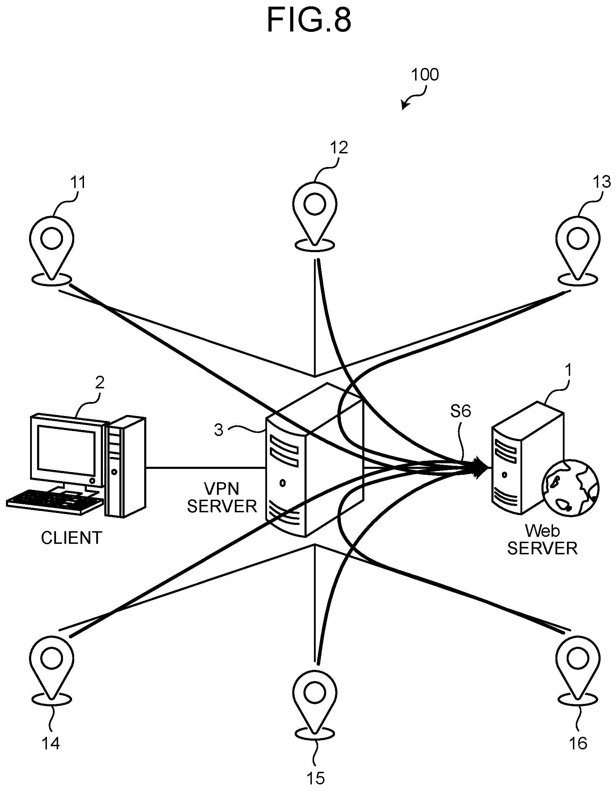

FIG. 3 illustrates a step of transmitting a web request from the client to the web server. FIG. 4 illustrates a step of transmitting an execution command from the web server to the client. FIG. 5 illustrates a step of transmitting execution requests from the client to the landmark devices. FIG. 6 illustrates a step of transmitting challenges from the landmark devices to the client. FIG. 7 illustrates a step of transmitting responses from the client to the landmark devices. FIG. 8 illustrates a step of notification of a round trip time from the landmarks devices to the web server. Here, a procedure from the transmission of a web request of the client 2 to the collection of information on a round trip time will be described with reference to FIGS. 3 to 8.

As illustrated in FIG. 3, the client 2 transmits a web request to the web server 1 via the VPN server 3 by using the web browser (Step S1).

When receiving the web request, the web server 1 transmits an execution command for executing measurement of a round trip time between the client 2 and each of the landmark devices 10 to the client 2 as illustrated in FIG. 4 (Step S2). Specifically, the web server 1 transmits the execution command to the VPN server 3. The VPN server 3 transfers the execution command transmitted from the web server 1 to the client 2, which is a transmission source of the web request.

The client 2 receives the execution command from the web server 1. Next, the client 2 generates execution requests for requesting execution of measurement of a round trip time in accordance with the execution command. Then, as illustrated in FIG. 5, the client 2 transmits the generated execution requests to the landmark devices 11 to 16 (Step S3).

The landmark devices 11 to 16 receive the execution requests transmitted from the client 2. Then, as illustrated in FIG. 6, the landmark devices 11 to 16 transmit challenges to the client 2 in accordance with instructions of the execution requests (Step S4). The challenges are commands with time stamps for requesting a reply.

The client 2 receives the challenges transmitted from the landmark devices 11 to 16. Then, as illustrated in FIG. 7, the client 2 transmits responses, which are replies to the challenges, to the landmark devices 11 to 16, which are transmission sources of the challenges (Step S5).

Each of the landmark devices 11 to 16 receives a response transmitted from the client 2. Next, each of the landmark devices 11 to 16 calculates a difference between the time indicated by a time stamp added to a transmitted challenge and the time when the response has been received, and determines a round trip time between the client 2 and each of the landmark devices 11 to 16 themselves. Then, as illustrated in FIG. 8, each of the landmark devices 11 to 16 transmits information on the calculated round trip time to the web server 1 (Step S6).

Returning to FIG. 2, the description will be continued. The relational model 106 is a machine training model indicating the relation between a round trip time between the client 2 and the landmark device 10 and the geographical position of the VPN server 3. More specifically, the relational model 106 is obtained by modeling a round trip time based on the following three elements. The first element is a communication delay (since d_{c} has one direction, dc is set as communication delay) between the client 2 and the VPN server 3. The second element is the positional relation between the VPN server 3 and each of the landmark devices 11 to 16. The third element is a use delay of each of the landmark devices 10 including a communication delay and a processing delay of the last mile in each of the landmark devices 10.

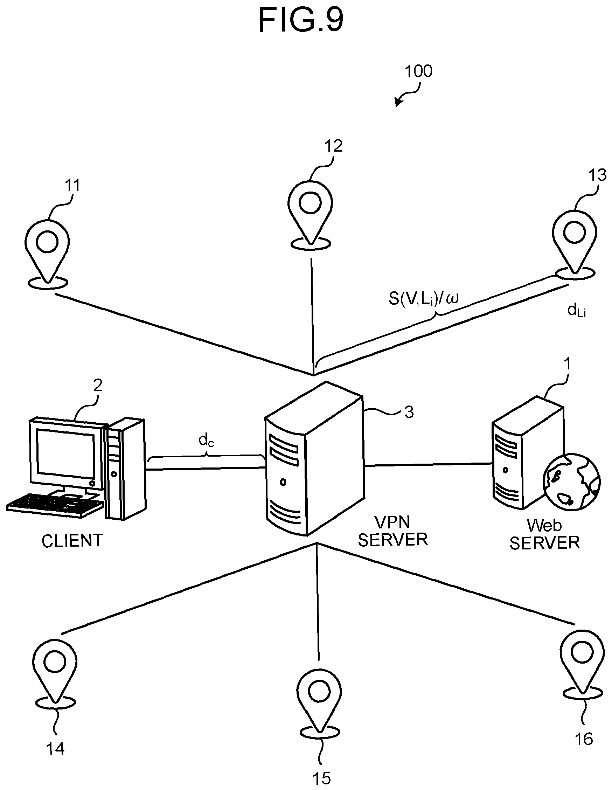

FIG. 9 illustrates parameters used in estimation processing using the relational model. Here, a time d_{c} in FIG. 9 is a communication delay between the client 2 and the VPN server 3. The time d_{c} includes processing times of the client 2 and the VPN server 3 together with an actual packet movement time between two points. Here, C represents the client 2.

S(V, Lᵢ) in FIG. 9 is a great-circular distance between the VPN server 3 and a landmark device 10. V denotes the VPN server 3. Lᵢ denotes the landmark device 10. For example, L₁₁ to L₁₆ can denote the landmark devices 11 to 16, respectively. The great-far distance is along the ground surface.

In FIG. 9, ω is a speed coefficient. Here, ω is a coefficient for converting a great-circular distance between devices in the web service system 100 into a measured value of a corresponding packet movement time between the devices. Furthermore, ω may be a fixed value in the web service system 100. In addition, ω may be a value depending on the VPN server 3, a value depending on the landmark device 10, or a value expressed as a function of both.

A time d_{Li} in FIG. 9 is a processing time of the landmark device 10. A packet moving from the landmark device 10 to the client 2 consumes the time d_{Li} before reaching the first network node where a communication path may be branched.

RTT(C, Lᵢ), which is a round trip time between the client 2 and the landmark device 10, is calculated by the following mathematical expression (1) based on definitions of the above-described parameters. RTT(C, Lᵢ) is a round trip time between the client 2 and the landmark device 10.$RTT \left(C, {L}_{i}\right) = 2 \times \left\{{d}_{C}+\frac{S \left(V, {L}_{i}\right)}{ω}+{d}_{{L}_{i}}\right\}$ (1)

S(V, Lᵢ) can be represented by S(Vlat, Vlong, Lᵢlat, Lᵢlong). Here, Vlat and Vlong represent the latitude and longitude of the VPN server 3, respectively. Furthermore, Lilat and Lilong represent the latitude and longitude of the landmark device 10, respectively. The latitudes and longitudes of the VPN server 3 and the landmark device 10 can be considered by representing S(V, Li) as S(Vlong, Vlat, Lᵢlong, Lᵢlat). That is, information on the latitude and longitude of the VPN server 3 can be estimated.

Here, a particle size in estimation of the relational model 106 can be reduced by, for example, setting ω to a value in accordance with each of the VPN server 3 and the landmark device 10. This enables the relational model 106 to express the geographical positions of the landmark device 10 and the VPN server 3 with various resolutions by using the speed coefficient ω and the landmark device 10 and the speed coefficient ω and the VPN server 3.

The relational model 106 can use the following mathematical expression (2) as an error function Err.$Err = {\sum }_{C , V , {L}_{i}} {\left({d}_{C}+\frac{S \left(V, {L}_{i}\right)}{ω}+{d}_{{L}_{i}}-\frac{RTT \left(C, {L}_{i}\right)}{2}\right)}^{2}$ (2)

RTT(C, Lᵢ) in the mathematical expression (2) is an actually measured value. That is, the relational model 106 can solve an optimization problem by estimating the time d_{C}, the geographical position of the VPN server 3, and the time d_{Li} which minimize the error function Err of the mathematical expression (2). In other words, the relational model 106 can calculate the time d_{C}, the geographical position of the VPN server 3, and the time d_{Li} in accordance with the actually measured round trip time by solving the optimization problem. Here, when ω is a value depending on the VPN server 3 or the landmark device 10, the relational model 106 also estimates ω.

Note that the relational model 106 can use a technique called active geolocation to be described below for estimating the position of the VPN server 3. Examples of the active geolocation include the following techniques. For example, there is a technique in which a packet such as Ping is transmitted from a specific web server to a specific client for measuring a communication delay to acquire a round trip time and the round trip time is converted into a physical distance based on a communication speed of an optical fiber or the like to estimate a distance. Moreover, as a technique of the active geolocation using the technique, there is a technique of identifying the position of a specific client by superimposing results of measured round trip times together based on packet transmission from a plurality of bases to the specific client. The relational model 106 can use the active geolocation in solving the optimization problem. When the relational model 106 solves the optimization problem by using the active geolocation, three or more landmark devices 10 are used.

Furthermore, although there are various optimization methods, the relational model 106 may optimize all variables in the error function Err in parallel, for example. Furthermore, the relational model 106 may optimize the variables in order by holding a specific variable as a constant and optimizing the rest. In addition, the relational model 106 can optimize the geographical position of the VPN server 3 while maximizing the time d_{Li} by using a condition that the time d_{Li} is the same for all packets. In that case, the relational model 106 can optimize the geographical position of the VPN server 3 while maximizing the time d_{Li} and the time d_{C}.

The relational model 106 performs the following estimation processing based on the above. The relational model 106 receives input of information on a round trip time between the client 2 and each of the landmark devices 10 from the position identification unit 105. The relational model 106 executes optimization processing by using the input information on a round trip time and the mathematical expression (2), and estimates the time d_{C}, the geographical position of the VPN server 3, and the time d_{Li}.

Next, the relational model 106 determines whether or not the VPN server 3 is present from the estimation result by the following method. If the VPN server 3 whose geographical position has been estimated is assumed as the client 2, the acquired round trip time is represented by the following mathematical expression (3). Here, V'ⱼ represents the VPN server 3 whose geographical position has been estimated. Furthermore, Dₗᵢ is a use delay of each of the landmark devices 10 preliminarily determined at the time of training.$T {′}_{i} = 2 \times \left\{{d}_{v ′}+\frac{s \left(v′,{L}_{i}\right)}{ω ′}+{D}_{{l}_{i}}\right\}$ (3)

The relational model 106 can estimate a time d_{v'} by performing optimization using the function. The time d_{v'} is a virtual communication delay between the client 2 and the VPN server 3 in a case where the VPN server 3 whose geographical position has been estimated is assumed to be the client 2.

Then, the relational model 106 outputs, to the position identification unit 105, the virtual communication delay between the client 2 and the VPN server 3 in a case where the VPN server 3 whose geographical position has been estimated is assumed to be the client 2. Furthermore, the relational model 106 outputs the estimated geographical position of the VPN server 3 and the communication delay between the VPN server 3 and the client 2 to the position identification unit 105.

Here, the VPN server 3 is an example of a "specific device". The relational model 106 is obtained by modeling the positional relation between each of the landmark devices 10 and the VPN server 3, a communication delay between the VPN server 3 and each of the landmark devices 10, and last-mile communication and processing time of a predetermined request in each of the landmark devices 10.

The position identification unit 105 receives input of information on a round trip time between the client 2 and each of the landmark devices 10 from the collection unit 103. The position identification unit 105 inputs information on the round trip time between the client 2 and each of the landmark devices 10 to the relational model 106. Then, the position identification unit 105 acquires output from the relational model 106, which is a reply to the input. The output information includes the estimated geographical position of the VPN server 3 and the communication delay between the VPN server 3 and the client 2. Furthermore, the output information includes a virtual communication delay between the client 2 and the VPN server 3 in a case where the VPN server 3 whose geographical position has been estimated is assumed to be the client 2.

In this manner, the position identification unit 105 identifies the geographical position of a place where the client 2 is present based on the relational model 106 indicating the relation between a delay and a distance and information on a round trip time for each of the landmark devices 10, which are marking devices. More specifically, the position identification unit 105 causes the relational model 106 to solve an optimization problem that minimizes a difference from delay information calculated based on the information on a round trip time and the relational model 106. Here, the communication delay between the VPN server 3 and the client 2 can be converted into a distance, that is, a positional relation between the VPN server 3 and the client 2 by using the speed coefficient ω. That is, it can be said that the position identification unit 105 calculates the positional relation between the landmark device 10 and the VPN server 3 and the positional relation between the VPN server 3 and the client 2 by causing the relational model 106 to solve an optimization problem.

The position identification unit 105 determines whether or not the VPN server 3 intervenes in the communication between the client 2 and the web server 1 from the virtual communication delay between the client 2 and the VPN server 3 in a case where the VPN server 3 whose geographical position has been estimated is the client 2. The VPN server 3 intervening in the communication between the client 2 and the web server 1 is hereinafter referred to as the "VPN server 3 is present".

For example, the position identification unit 105 determines whether or not the VPN server 3 is present by comparing the virtual communication delay between the client 2 and the VPN server 3 with a predetermined threshold H. When the communication delay is equal to or more than the threshold H, the position identification unit 105 determines that the VPN server 3 is present. In contrast, when the communication delay is less than the threshold H, the position identification unit 105 determines that the VPN server 3 is not present. For example, when geo-fencing is performed on a country basis, a value of 6 to 8 ms can be used as the threshold H. More specifically, the threshold H can be set to 7.5 ms.

In this manner, the position identification unit 105 determines the presence or absence of the VPN server 3 on the assumption that the VPN server 3 is the client 2 based on the positional relation between each of the landmark devices 10 and the VPN server 3 and the positional relation between the VPN server 3 and the client 2, which have been calculated.

When the VPN server 3 is not present, the position identification unit 105 notifies the request processing unit 104 that the geographical position of the client 2 indicated by communication information from the client 2 is correct. In contrast, when the VPN server 3 is present, the position identification unit 105 calculates a distance from the position of the VPN server 3 obtained by multiplying the communication delay between the client 2 and the VPN server 3 by a speed coefficient. Then, the position identification unit 105 estimates the point distant by the calculated distance as the geographical position of the client 2. The position identification unit 105 notifies the request processing unit 104 of the estimated geographical position of the client 2.

In this manner, when the VPN server 3 is present, the position identification unit 105 performs the following processing. The position identification unit 105 calculates the position coordinates of the VPN server 3 and the distance between the client 2 and the VPN server 3 based on the positional relation between each of the landmark devices 10 and the VPN server 3 and the positional relation between the VPN server 3 and the client 2.

Note that, although the position identification unit 105 here determines the presence or absence of the VPN server 3 by using a communication delay, the position identification unit 105 can use a virtual distance between the client 2 and the VPN server 3. For example, the position identification unit 105 calculates the virtual distance between the client 2 and the VPN server 3 by multiplying the virtual communication delay between the client 2 and the VPN server 3 by a speed coefficient. Then, the position identification unit 105 may determine the presence or absence of the VPN server 3 by comparing the calculated distance with a predetermined threshold of a distance.

The request processing unit 104 receives input of a web request from the request reception unit 101. Furthermore, the request processing unit 104 receives, from the position identification unit 105, input indicating that the geographical position of the client 2 indicated by the communication information from the client 2 is correct, or input of information on the estimated geographical position of the client 2.

When the geographical position of the client 2 indicated by the communication information from the client 2 is correct, the request processing unit 104 transmits a reply to the request to the client 2 if the permitted area includes the geographical position of the client 2 obtained from the communication information.

In contrast, when input of the information on the estimated geographical position of the client 2 is received, the request processing unit 104 determines whether or not the permitted area includes the estimated geographical position of the client 2. When the permitted area includes the estimated geographical position of the client 2, the request processing unit 104 transmits the reply to the request to the VPN server 3. In contrast, when the non-permitted area includes the estimated geographical position of the client 2, the request processing unit 104 transmits, to the VPN server 3, a reply indicating that no reply is to be made to the request or no service is to be provided.

The training processing unit 107 performs training by preliminarily executing practice of the relational model 106. The relational model 106 can identify a use delay of each of the landmark devices 10 by performing training.

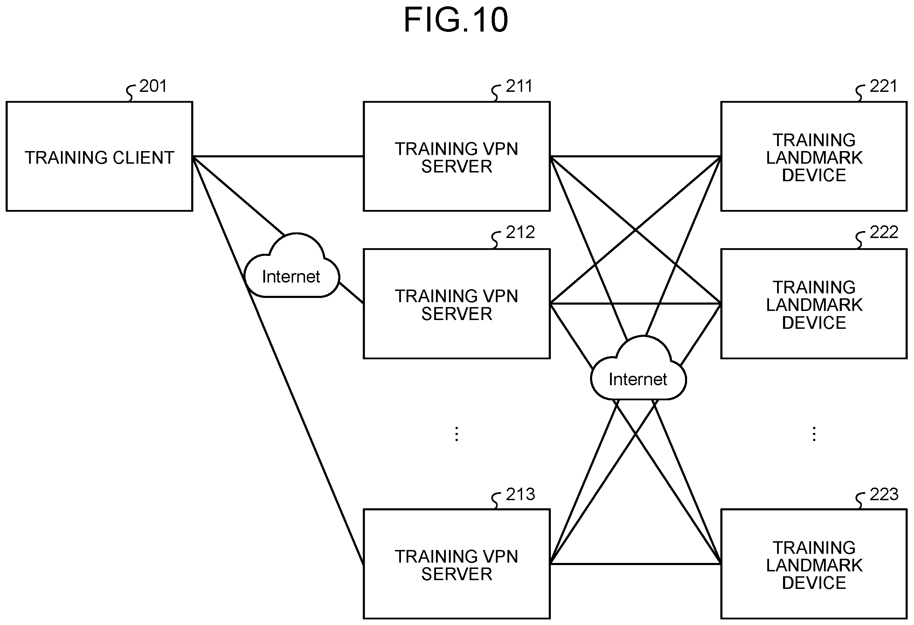

FIG. 10 illustrates an example of a system configuration used in training of the relational model. The geographical positions of a training client 201, training VPN servers 211 to 213, and training landmark devices 221 to 223 are all known. The training processing unit 107 preliminarily holds information on the geographical position of the training client 201. Furthermore, the training processing unit 107 preliminarily holds information on the training VPN servers 211 to 213. Here, an example of a case where there are m training VPN servers 211 to 213 will be described. Furthermore, the training processing unit 107 preliminarily holds information on the geographical positions of the training landmark devices 221 to 223. Here, the training landmark devices 221 to 223 preferably include a device actually used for estimating the geographical position of the client 2 that has transmitted a request in an operation.
For example, the training landmark devices 221 to 223 may be the landmark devices 11 to 16. Here, an example of a case where there are n training landmark devices 221 to 223 will be described.

The training processing unit 107 causes the training client 201 to transmit a challenge to each of the training landmark devices 221 to 223 via each of the training VPN servers 211 to 213. The challenge is a signal with a time stamp for requesting a reply. The training processing unit 107 causes a response, which is a signal of a reply to the challenge, to be returned from each of the training landmark devices 221 to 223 to the training client 201 by causing each of the training landmark devices 221 to 223 to receive the challenge. Next, the training processing unit 107 causes the training client 201 to receive the response sent from each of the training landmark devices 221 to 223 via each of the training VPN servers 211 to 213. Then, the training processing unit 107 causes the training client 201 to calculate a difference between the time when the training client 201 has received the response and the time indicated by the time stamp added to the challenge corresponding to the response. Then, the training processing unit 107 acquires the calculation result from the training client 201 as a round trip time between the training client 201 and each of the training landmark devices 221 to 223 via each of the training VPN servers 211 to 213.

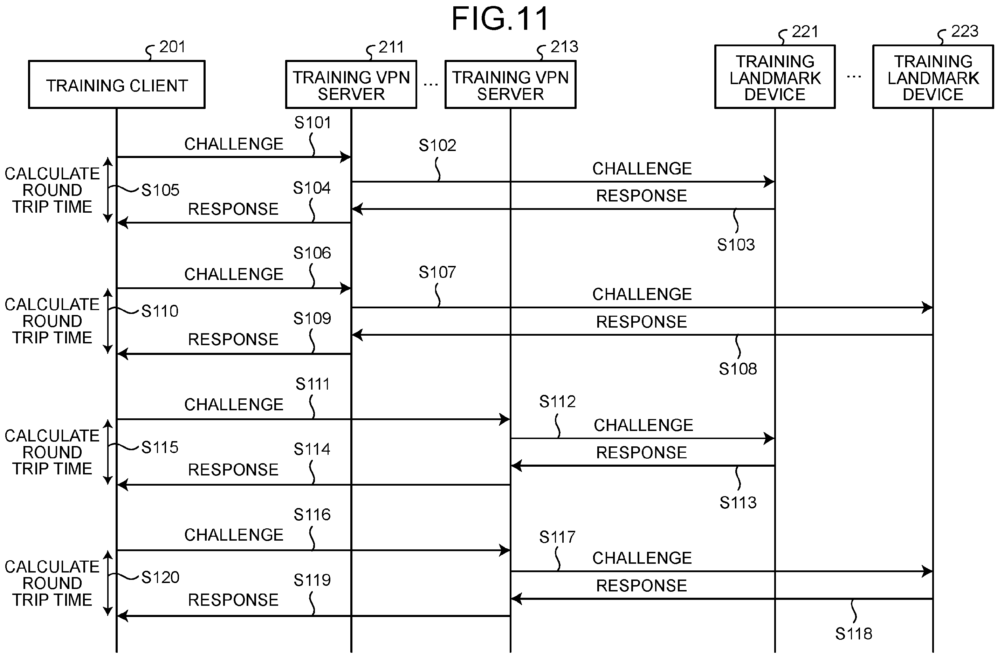

FIG. 11 is a sequence diagram of processing of collecting a round trip processing time at the time of training. Next, a flow of the processing of collecting a round trip processing time at the time of training will be described again with reference to FIG. 11.

The training client 201 transmits a challenge directed to the training landmark device 221 to the training VPN server 211 (Step S101).

The training VPN server 211 transmits the challenge received from the training client 201 to the training landmark device 221 (Step S102).

The training landmark device 221 transmits a response to the received challenge to the training VPN server 211 (Step S103).

The training VPN server 211 transmits the response received from the training landmark device 221 to the training client 201 (Step S104).

The training client 201 calculates a round trip time between the training client 201 and the training landmark device 221 via the training VPN server 211 (Step S105).

The training client 201 similarly performs processing of measuring a round trip time for the other training landmark devices 222 to 223. Here, a case of the training landmark device 223 will be described in an example.

The training client 201 transmits a challenge directed to the training landmark device 223 to the training VPN server 211 (Step S106).

The training VPN server 211 transmits the challenge received from the training client 201 to the training landmark device 223 (Step S107).

The training landmark device 223 transmits a response to the received challenge to the training VPN server 211 (Step S108).

The training VPN server 211 transmits the response received from the training landmark device 223 to the training client 201 (Step S109).

The training client 201 calculates a round trip time between the training client 201 and the training landmark device 223 via the training VPN server 211 (Step S110).

The training client 201 similarly performs processing of measuring a round trip time for the other training VPN servers 212 to 213. Here, a case of the training VPN server 213 will be described in an example.

The training client 201 transmits a challenge directed to the training landmark device 221 to the training VPN server 213 (Step S111).

The training VPN server 213 transmits the challenge received from the training client 201 to the training landmark device 221 (Step S112).

The training landmark device 221 transmits a response to the received challenge to the training VPN server 213 (Step S113).

The training VPN server 213 transmits the response received from the training landmark device 221 to the training client 201 (Step S114).

The training client 201 calculates a round trip time between the training client 201 and the training landmark device 221 via the training VPN server 213 (Step S115).

Moreover, a case of the training landmark device 223 will be described in an example.

The training client 201 transmits a challenge directed to the training landmark device 223 to the training VPN server 213 (Step S116).

The training VPN server 213 transmits the challenge received from the training client 201 to the training landmark device 223 (Step S117).

The training landmark device 223 transmits a response to the received challenge to the training VPN server 213 (Step S118).

The training VPN server 213 transmits the response received from the training landmark device 223 to the training client 201 (Step S119).

The training client 201 calculates a round trip time between the training client 201 and the training landmark device 223 via the training VPN server 213 (Step S120). As described above, the training client 201 acquires a round trip time between the training client 201 and each of the training landmark devices 221 to 223 via each of the training VPN servers 211 to 213.

Returning to FIG. 2, the description will be continued. After collecting information on the round trip time calculated as described above, the training processing unit 107 causes the relational model 106 to perform training by using the following mathematical expression (4).

Here, a time dⱼ in the mathematical expression (4) is a communication time between the training client 201 and each of the training landmark devices 221 to 223. Furthermore, s(vⱼ, Lᵢ) is a distance between each of the training VPN servers 211 to 213 and each of the training landmark devices 221 to 223. In vⱼ, j = 1, 2,..., and m is established, and vⱼ indicates each of m training VPN servers 211 to 213. In Lᵢ, i = 1, 2,..., and n is established, and Lᵢ indicates each of n training landmark devices 221 to 223. Furthermore, a time dᵢ is a processing time of each of the training landmark devices 221 to 223. Furthermore, T_{i,j} is a round trip time between the training client 201 and each of the training landmark devices 221 to 223 represented as Lᵢ via the training VPN servers 211 to 213 represented as Vⱼ.${T}_{i , j} = 2 \times \left\{{d}_{j}+\frac{s \left({V}_{j}, {L}_{i}\right)}{ω}+{d}_{i}\right\}$ (1)

The training processing unit 107 causes the relational model 106 to solve an optimization problem of the mathematical expression (4) by using the time dⱼ, the time dᵢ, and the speed coefficient ω as parameters and using a round trip time between the training client 201 and each of the training landmark devices 221 to 223 as a correct answer. The training processing unit 107 thereby causes the relational model 106 to identify the optimum value of the time dᵢ.

In this case, the geographical positions of the training client 201 and the training landmark devices 221 to 223 are known, so that the relational model 106 can optimize the time dᵢ by using the known geographical positions. The time dᵢ, which is a processing time of the training landmark devices 221 to 223, can be used as Dₗᵢ in the mathematical expression (3) used for determining whether or not the VPN server 3 is present. Furthermore, the relational model 106 can also optimize the speed coefficient ω. As described above, the training processing unit 107 causes the relational model 106 to perform training to generate the trained relational model 106.

In this manner, the training processing unit 107 preliminarily measures a processing time of last-mile communication and a predetermined request in each of the landmark devices 10, and adjusts the parameters of the relational model 106 by using the measurement result.

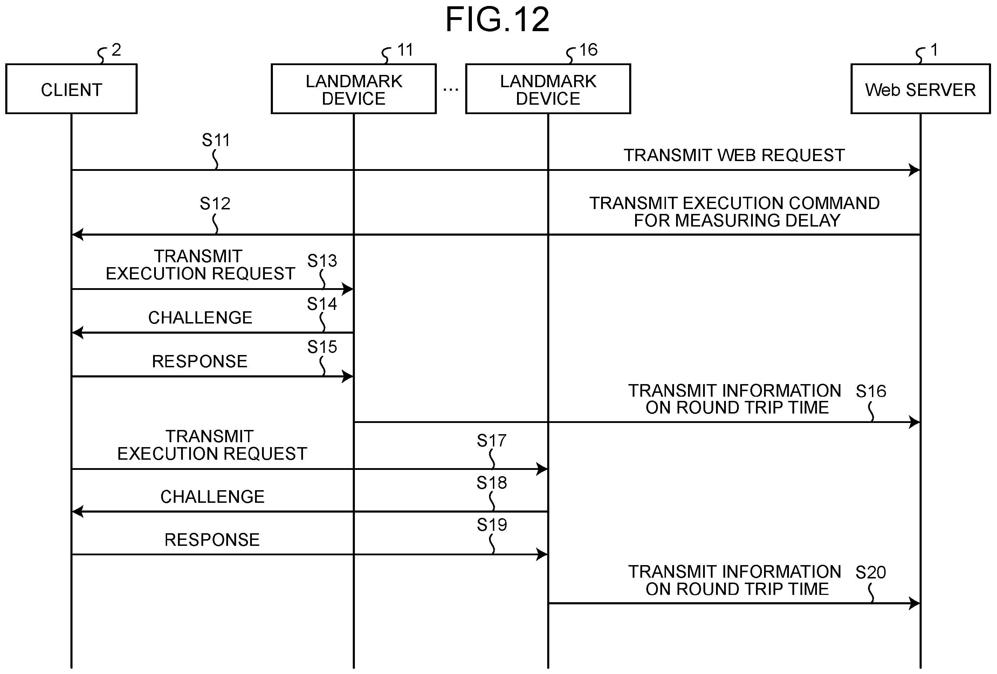

FIG. 12 is a sequence diagram of the processing of collecting a round trip processing time in a case where a web request is received. Next, a flow of the processing of collecting a round trip processing time in a case where the web server 1 receives a web request from the client 2 will be described again with reference to FIG. 12.

The client 2 transmits a web request to the web server 1 by using a web browser (Step S11). In the case, it is unclear whether or not the client 2 transmits a web request to the web server 1 via the VPN server 3.

Next, the web server 1 transmits an execution command for measuring a delay to the client 2 (Step S12).

The client 2 generates an execution request for requesting execution of measurement of a round trip time in accordance with the execution command. Then, the client 2 transmits the generated execution request to the landmark device 11 (Step S13).

The landmark device 11 receives the execution request transmitted from the client 2. Then, the landmark device 11 transmits a challenge with a time stamp to the client 2 in accordance with an instruction of the execution request (Step S14).

The client 2 receives the challenge transmitted from the landmark device 11. Then, the client 2 transmits a response, which is a reply to the challenge, to the landmark device 11 (Step S15).

The landmark device 11 receives the response transmitted from the client 2. Next, the landmark device 11 determines a round trip time between the client 2 and the landmark device 11 from a difference between the time indicated by the time stamp added to the transmitted challenge and the time when the response has been received. Then, the landmark device 11 transmits information on the calculated round trip time to the web server 1 (Step S16).

As in the case of the landmark device 11, the client 2 and the landmark devices 12 to 16 transmit an execution request, transmit a challenge, return a response, and transmit information on a round trip time. Here, the landmark device 16 will be described in an example.

The client 2 transmits the generated execution request to the landmark device 16 (Step S17).

The landmark device 16 receives the execution request transmitted from the client 2. Then, the landmark device 16 transmits a challenge with a time stamp to the client 2 in accordance with an instruction of the execution request (Step S18).

The client 2 receives the challenge transmitted from the landmark device 16. Then, the client 2 transmits a response, which is a reply to the challenge, to the landmark device 16 (Step S19).

The landmark device 16 receives the response transmitted from the client 2. Next, the landmark device 16 determines a round trip time between the client 2 and the landmark device 16 from a difference between the time indicated by the time stamp added to the transmitted challenge and the time when the response has been received. Then, the landmark device 16 transmits information on the calculated round trip time to the web server 1 (Step S20).

Here, although FIG. 11 illustrates a case where a round trip time is measured and transmission processing is executed in order for each of the landmark devices 11 to 16, these pieces of processing can be executed in parallel.

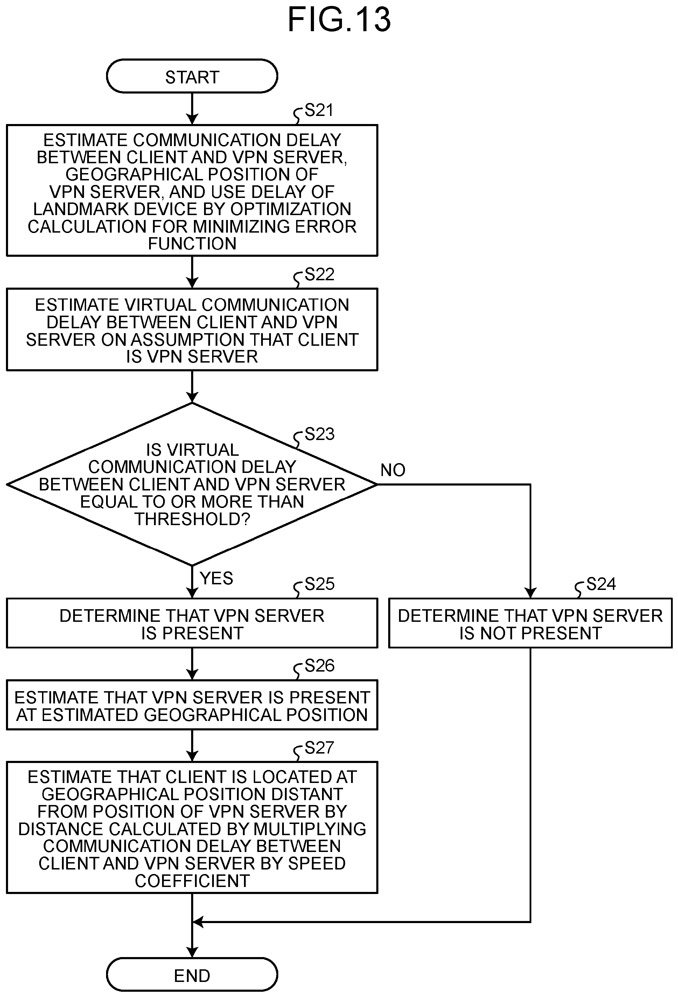

FIG. 13 is a flowchart of processing of determining the presence or absence of the VPN server and processing of estimating the geographical position of the client. Next, a flow of the processing of determining the presence or absence of the VPN server 3 and the processing of estimating the geographical position of the client 2 will be described with reference to FIG. 13.

The position identification unit 105 inputs information on the round trip time between the client 2 and each of the landmark devices 10 to the relational model 106. The relational model 106 executes optimization calculation for minimizing error function by using the input information on a round trip time and the mathematical expression (2), and estimates a communication delay between the client 2 and the VPN server 3, the geographical position of the VPN server 3, and a use delay of each of the landmark devices 10 (Step S21)

Next, the relational model 106 assumes that the VPN server 3 whose geographical position has been estimated is the client 2. Then, the relational model 106 estimates a virtual communication delay between the client 2 and the VPN server 3 in a case where the VPN server 3 whose geographical position has been estimated is assumed to be the client 2 (Step S22).

The position identification unit 105 determines whether or not the virtual communication delay between the client 2 and the VPN server 3 in a case where the VPN server 3 whose geographical position has been estimated by the relational model 106 is assumed to be the client 2 is equal to or more than a threshold (Step S23).

When the virtual communication delay between the client 2 and the VPN server 3 is less than the threshold (Step S23: No), the position identification unit 105 determines that the VPN server 3 is not present (Step S24). In this case, the position identification unit 105 notifies the request processing unit 104 that the geographical position of the client 2 indicated by communication information from the client 2 is correct.

In contrast, when the virtual communication delay between the client 2 and the VPN server 3 equal to or more than the threshold (Step S23: Yes), the position identification unit 105 determines that the VPN server 3 is present (Step S25).

Next, the position identification unit 105 estimates that the VPN server 3 is present at the geographical position of the VPN server 3 estimated by the relational model 106 (Step S26).

Next, the position identification unit 105 calculates a distance from the position of the VPN server 3 by multiplying the communication delay between the client 2 and the VPN server 3 by a speed coefficient. Then, the position identification unit 105 estimates the point distant by the calculated distance as the geographical position of the client 2 (Step S27). In this case, the position identification unit 105 notifies the request processing unit 104 of the estimated geographical position of the client 2.

As described above, when receiving a web request from the client 2, the web server 1 according to the embodiment collects a round trip time between the client 2 and each of the landmark devices 11 to 16. Then, the web server 1 inputs each round trip time to the relational model 106 indicating the relation between a delay and a distance, and acquires estimation results of a delay time between the client 2 and the VPN server 3, the geographical position of the VPN server 3, and a result of estimating a processing time of the landmark device 10. Moreover, the web server 1 acquires, from the relational model 106, a result of estimating a virtual round trip time between the client 2 and the VPN server 3 in a case where the VPN server 3 is assumed to be the client 2, and determines whether or not the VPN server 3 is present. When the VPN server 3 is present, the web server 1 estimates the geographical position of the client 2 from the estimated delay time between the client 2 and the VPN server 3 and the geographical position of the VPN server 3.

This enables the web server 1 to identify the geographical position of the client 2 even in a case where the VPN server 3 hides the geographical position of the client 2 that has transmitted the web request. The web server 1 can determine whether or not a user who has transmitted the request has legitimate authority to receive service in a case where geo-fencing and the like are set by identifying the geographical position of the client 2. That is, web service can be appropriately operated and managed.

### (Hardware Configuration)

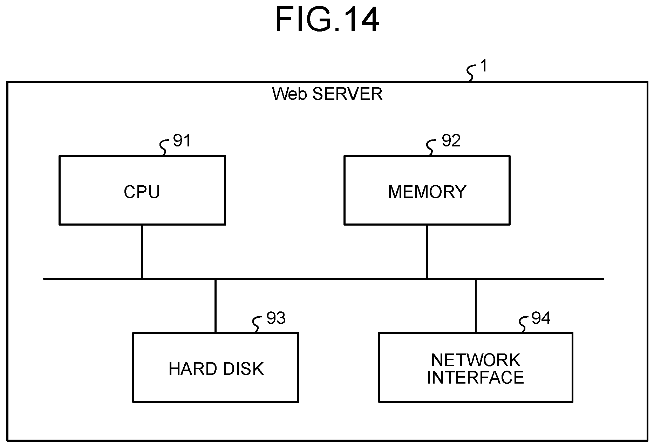

FIG. 14 is a hardware configuration diagram of the web server. Next, an example of a hardware configuration for implementing each function of the web server 1 will be described with reference to FIG. 14.

As illustrated in FIG. 14, the web server 1 includes, for example, a central processing unit (CPU) 91, a memory 92, a hard disk 93, and a network interface 94. The CPU 91 is connected to the memory 92, the hard disk 93, and the network interface 94 via a bus.

The network interface 94 is an interface for the communication between the web server 1 and an external device. The network interface 94 relays, for example, the communication between the client 2 or the VPN server 3 and the CPU 91.

The hard disk 93 is an auxiliary storage device. The hard disk 93 may store the relational model 106 in FIG. 2. Furthermore, the hard disk 93 stores various programs including programs for implementing the functions of the request reception unit 101, the execution command transmission unit 102, the collection unit 103, the request processing unit 104, the position identification unit 105, and the training processing unit 107 in FIG. 2.

The memory 92 is a main storage device. For example, a dynamic random access memory (DRAM) can be used as the memory 92.

The CPU 91 reads various programs from the hard disk 93, develops the programs in the memory 92, and executes the programs. This causes the CPU 91 to implement the functions of the request reception unit 101, the execution command transmission unit 102, the collection unit 103, the request processing unit 104, the position identification unit 105, and the training processing unit 107 in FIG. 1. In any of the above aspects, the various features may be implemented in hardware, or as software modules running on one or more processors/computers. The disclosure also provides a computer program or a computer program product comprising instructions which, when executed by a computer, cause the computer to carry out any of the methods/method steps described herein, and a non-transitory computer-readable medium comprising instructions which, when executed by a computer, cause the computer to carry out any of the methods/method steps described herein. A computer program may be stored on a non-transitory computer-readable medium, or it could, for example, be in the form of a signal such as a downloadable data signal provided from an Internet website, or it could be in any other form.

In one aspect, the present disclosure can appropriately operate and manage web service.

## Claims

1. An information processing apparatus comprising:
a request reception unit (101) configured to receive a web request from a user terminal device (2);
an execution command transmission unit (102) configured to transmit, to the user terminal device (2), an execution command for transmitting a predetermined request to one or more marking devices (11-16) whose geographical positions are known;
a collection unit (103) configured to collect, from each of the marking devices (11-16), information on a round trip time between each of the marking devices (11-16) and the user terminal device (2) for each of the marking devices (11-16) to which the predetermined request has been transmitted from the user terminal device (2); and
a position identification unit (105) configured to identify a geographical position of a place where the user terminal device (2) is present based on a relational model (106) indicating a relation between a delay and a distance and information on the round trip time for each of the marking devices (11-16).

2. The information processing apparatus according to claim 1, wherein the execution command is issued for causing each of the marking devices (11-16) that have received the predetermined request from the user terminal device (2) to measure the round trip time from when the user terminal device (2) transmits a reply request to when the user terminal device (2) receives a reply to the reply request.

3. The information processing apparatus according to claim 1 or 2, wherein the position identification unit (105) uses a positional relation between each of the marking devices (11-16) and a specific device (3) used for communication by the user terminal device (2), a communication delay between the specific device (3) and each of the marking devices (11-16), and the relational model (106) obtained by modeling a processing time of last-mile communication and the predetermined request in each of the marking devices (11-16).

4. The information processing apparatus according to claim 3, further including a training processing unit (107) configured to preliminarily measure a processing time of last-mile communication and the predetermined request in each of the marking devices (11-16) and adjust a parameter of the relational model (106) by using a measurement result.

5. The information processing apparatus according to claim 3 or 4, wherein the position identification unit (105) causes the relational model (106) to solve an optimization problem that minimizes a difference from delay information calculated based on information on the round trip time and the relational model (106), and calculates a positional relation between each of the marking devices (11-16) and the specific device (3) and a positional relation between the specific device (3) and the user terminal device (2).

6. The information processing apparatus according to claim 5, wherein the position identification unit (105) determines presence or absence of the specific device (3) based on the positional relation between each of the marking devices (11-16) and the specific device (3) and the positional relation between the specific device (3) and the user terminal device (2), which have been calculated.

7. The information processing apparatus according to claim 6, wherein, when the specific device (3) is present, the position identification unit (105) calculates a position coordinate of the specific device (3) and a distance between the user terminal device (2) and the specific device (3) based on the positional relation between each of the marking devices (11-16) and the specific device (3) and the positional relation between the specific device (3) and the user terminal device (2).

8. An information processing method comprising:
receiving a web request from a user terminal device (2);
transmitting, to the user terminal device (2), an execution command for transmitting a predetermined request to one or more marking devices (11-16) whose geographical positions are known;
collecting, from each of the marking devices (11-16), information on a round trip time between each of the marking devices (11-16) and the user terminal device (2) for each of the marking devices (11-16) to which the predetermined request has been transmitted from the user terminal device (2); and
identifying a geographical position of a place where the user terminal device (2) is present based on a relational model (106) indicating a relation between a delay and a distance and information on the round trip time for each of the marking devices (11-16).

9. An information processing program for causing a computer to execute a process comprising:
receiving a web request from a user terminal device (2);
transmitting, to the user terminal device (2), an execution command for transmitting a predetermined request to one or more marking devices (11-16) whose geographical positions are known;
collecting, from each of the marking devices (11-16), information on a round trip time between each of the marking devices (11-16) and the user terminal device (2) for each of the marking devices (11-16) to which the predetermined request has been transmitted from the user terminal device (2); and
identifying a geographical position of a place where the user terminal device (2) is present based on a relational model (106) indicating a relation between a delay and a distance and information on the round trip time for each of the marking devices (11-16).
